# EUROPEAN PATENT APPLICATION

(11) **EP 2 597 641 A1**
(43) Date of publication of application: **29.05.2013**
(21) Application number: 12183937.7
(22) Date of filing: 11.09.2012
(51) Int. Cl.: G11B 5/02

(54) **Magnetic recording system with multi-level write current**

(30) Priority: 22.11.2011 US 201113302169
(71) Applicant: LSI Corporation, Milpitas, CA 95035 (US)
(72) Inventor: Livshitz, Boris, Eagan, MN 55121 (US); Wilson, Ross S., Menlo Park, CA 94025 (US); Goldberg, Jason S., Saint Paul, MN 55105 (US)
(74) Representative: Martin, Philip John

(57) **Abstract**

Various embodiments of the present invention provide apparatuses, systems and methods for magnetic recording with a multi-level write current waveform. For example, an apparatus for magnetic recording with a multi-level write current waveform is disclosed that includes a pattern detection circuit (400) operable to detect patterns in data to be written by the magnetic write head (764) and to yield a pattern indicator signal (502), and a write driver (132) operable to generate the multi-level write current waveform for the magnetic write head (764). At least one electrical characteristic of the multi-level write current waveform is based upon the patterns detected by the pattern detection circuit (400).

## Description

### BACKGROUND

Various magnetic recording systems such as hard disk drives utilize a write head to record data on a magnetic medium. Data to be recorded is provided to the write head coil as an alternating electrical current. The electrical current passes through a metallic coil wrapping around the write head, generating a magnetic field. The magnetization state of a pole tip in the write head is switched by the magnetic field. As the magnetized pole tip is passed over the magnetic storage medium, for example a spinning ferromagnetic platter, the magnetization of regions of the magnetic medium below the pole tip are altered and can later be read back to retrieve the data.

The write (recording) process is challenging at high speeds in magnetic recording. Conventional write current waveforms used to drive the write head to record data on a given track are fixed in terms of the write current pulse characteristics. However, the switching response of the magnetic system is not linear. The magnetic response for one write pulse can be considered as a three-stage process: switching (stage I), transition to saturation (stage II), and saturation (stage III). The third and even possibly the second stage may be truncated in the case of a high density recorded pattern when the bit cell period (T) is less than the magnetic switching time. The non-linearity between excitation and response signals is more pronounced as the data rate increases and the bit sequence includes more high frequency transitions. The following negative effects accompany this recording process: first, an increase in the curvature of the transitions; second, a bit-to-bit transition degradation; third, a track width modulation. As a result, the global recording performance degrades, and data rate and areal density are limited.

Because magnetic recording systems are continually being enhanced with areal density and faster data rates, there exists a need in the art for improving the write process.

### BRIEF SUMMARY

Various embodiments of the present invention provide apparatuses, systems and methods for magnetic recording with a multi-level write current. According to a first aspect of the invention, there is provided an apparatus for magnetic recoding as set out in claim 1. For example, an apparatus for magnetic recording with a multi-level write current is disclosed that includes a pattern detection circuit operable to detect patterns in data to be written by the magnetic write head and to yield a pattern indicator signal, and a write driver operable to generate the multi-level write current for the magnetic write head. At least one electrical characteristic of the multi-level write current is based upon the patterns detected by the pattern detection circuit. In some cases, the patterns represent a magnetic saturation level of the magnetic write head. The write driver is operable in some instances to generate a first write current level for a transition in the data to be written when the magnetic saturation level of the magnetic write head is above a particular saturation level and to generate a second write current level when the magnetic saturation level of the magnetic write head is below the particular saturation level, where the first write current level is more aggressive than the second write current level. In some embodiments, the electrical characteristic of the multi-level write current waveform may include one or more of an overshoot pulse amplitude, an overshoot pulse width and a steady state current level following an overshoot pulse.
In an embodiment of the invention, the patterns in the data to be written by the magnetic write head represent a magnetic saturation level of the magnetic write head; wherein the write driver is operable to generate a first write current level for a transition in the data to be written when the magnetic saturation level of the magnetic write head is above a particular saturation level and to generate a second write current level when the magnetic saturation level of the magnetic write head is below the particular saturation level, wherein the first write current level is more aggressive than the second write current level.
In an embodiment of the invention, the pattern detection circuit is operable to detect at least a first run length and a second run length in the data to be written by the magnetic write head. In another embodiment of the invention, the pattern detection circuit is operable to detect whether data preceding a transition remains unchanged longer than a first duration and whether data following the transition will remain unchanged longer than a second duration.
In an embodiment, the first duration and the second duration comprise a bit period in the data to be written by the magnetic write head.
In an embodiment, the write driver is operable to generate the multi-level write current waveform with first characteristics when the data preceding the transition does not remain unchanged longer than the first duration and the data following the transition does remain unchanged longer than the second duration; wherein the write driver is operable to generate the multi-level write current waveform with second characteristics when the data preceding the transition does remain unchanged longer than the first duration and the data following the transition does remain unchanged longer than the second duration; wherein the write driver is operable to generate the multi-level write current waveform with third characteristics when the data preceding the transition does not remain unchanged longer than the first duration and the data following the transition does not remain unchanged longer than the second duration; wherein the write driver is operable to generate the multi-level write current waveform with fourth characteristics when the data preceding the transition does remain unchanged longer than the first duration and the data following the transition does not remain unchanged longer than the second duration; and wherein the second characteristics are more aggressive than the first characteristics, and the third characteristics are more aggressive than the second characteristics, and the fourth characteristics are more aggressive than the third characteristics.
In an embodiment of the invention, the at least one electrical characteristic of the multi-level write current waveform is selected from a group consisting of an overshoot pulse amplitude, an overshoot pulse width and a steady state current level following an overshoot pulse.
In an embodiment, the pattern indication signal comprises a first signal indicating when the data to be written by the magnetic write head has a first pulse duration and a second signal indicating when the data be written has a second pulse duration, the apparatus further comprising a multi-level differential signal generator circuit operable to generate a ternary signal based on the pattern indication signal.
In an embodiment, the invention further comprises a receiver operable to determine a state of the ternary signal and to control the write driver based on the state of the ternary signal; and/or wherein the receiver comprises a zero crossing detector and a plurality of slicers; and/or wherein the pattern detection circuit and the multi-level differential signal generator circuit are located in a channel circuit, and wherein the receiver and the write driver are located in a preamplifier circuit.
In an embodiment, the write driver comprises an overshoot pulse generator operable to provide an overshoot pulse in the multi-level write current waveform at transitions in the data to be written.
In an embodiment, the write driver comprises an output driver bridge and a plurality of reference current sources connected to the output driver bridge.
In another embodiment, the output driver bridge comprises a plurality of power current sources operable to switch the multi-level write current waveform through the magnetic write head; and/or wherein the plurality of power current sources each comprise a plurality of current mirrors, each of the plurality of current mirrors contributing a current from one of the reference current sources to the multi-level write current waveform.
In an embodiment, the pattern detection circuit and the write driver are located in a preamplifier circuit, the apparatus further comprising a phase-locked loop in the preamplifier circuit operable to recover a clock signal from the data to be written by the magnetic write head; and/or wherein the magnetic write head, the pattern detection circuit and the write driver are incorporated in a storage device.
In a related aspect of the invention, there is provided a method of recording data in a magnetic storage device with a multi-level write current waveform, comprising: determining a magnetization state of a pole tip in a write head based on a run length of data sequences adjacent to a data transition; generating at least one signal representing the magnetization state of the pole tip; and generating the multi-level write current waveform for the write head based on the at least one signal, wherein the multi-level write current waveform is more aggressive for the data transition when the magnetization state is saturated and less aggressive for the data transition when the magnetization state is non-saturated.
In a further related aspect of the invention, there is provided a storage system comprising: a storage medium maintaining a data set; a write head operable to magnetically record the data set to the storage medium; a pattern detection circuit operable to detect a run length in the data set adjacent a transition; and a write driver operable to generate a multi-level write current waveform for a coil in the write head, wherein at least one electrical characteristic of the multi-level write current waveform is based upon the run length detected by the pattern detection circuit.

This summary provides only a general outline of some embodiments according to the present invention. Many other objects, features, advantages and other embodiments of the present invention will become more fully apparent from the following detailed description, the appended claims and the accompanying drawings.

### BRIEF DESCRIPTION OF THE DRAWINGS

A further understanding of the various embodiments of the present invention may be realized by reference to the figures which are described in remaining portions of the specification. In the figures, like reference numerals may be used throughout several drawings to refer to similar components. In the figures, like reference numerals are used throughout several figures to refer to similar components. In some instances, a sub-label consisting of a lower case letter is associated with a reference numeral to denote one of multiple similar components. When reference is made to a reference numeral without specification to an existing sub-label, it is intended to refer to all such multiple similar components.

Fig. 1 depicts a magnetic storage system including a write channel circuit, preamplifier and write head in accordance with some embodiments of the present invention;

Fig. 2 depicts waveforms for encoded write data and associated write current pulses in an example of multi-level write currents in accordance with some embodiments of the present invention;

Figs. 3A and 3B depict example waveforms for channel data, preamplifier write current and write head magnetic field response with multi-level write current disabled and enabled, respectively, in accordance with some embodiments of the present invention;

Fig. 4 depicts a schematic of a pattern detection circuit in accordance with some embodiments of the present invention;

Fig. 5 depicts a multi-level differential signal generator circuit in accordance with some embodiments of the present invention;

Fig. 6 depicts a timing diagram for various signals in a pattern detection circuit and a multi-level differential signal generator circuit in accordance with some embodiments of the present invention;

Fig. 7 depicts a multi-level write driver with multi-level differential signal receiver and output driver that may be used in a preamplifier circuit in accordance with some embodiments of the present invention;

Fig. 8 depicts a power current source that may be used in an output driver in accordance with some embodiments of the present invention;

Fig. 9 depicts a switched current mirror that may be used in a power current source in accordance with some embodiments of the present invention;

Fig. 10 depicts a preamplifier including a phase locked loop, pattern detection circuit and multi-level write driver that may be used in a preamplifier circuit in accordance with some embodiments of the present invention; and

Fig. 11 depicts a flow diagram of a method for recording data in a magnetic storage device with a multi-level write current in accordance with some embodiments of the present invention.

### DETAILED DESCRIPTION OF THE INVENTION

Various embodiments of the present invention provide apparatuses, systems and methods for magnetic recording with a multi-level write current. A variety of characteristics of the write current waveform used to force magnetization switching of a pole tip in a write head may be controlled to improve recording performance, including but not limited to overshoot amplitude, overshoot duration, steady state current I_{W}, current rise time, etc. The adaptation or variation of the write current is based in some embodiments on the initial magnetic state of the pole tip (saturated or unsaturated) and the length of the constant data sequence to be recorded (short or long). The initial magnetic state of the pole tip is determined in some embodiments by the prior data sequence length. If a long data sequence of a particular state has just been written, the pole tip will have had sufficient time to become magnetically saturated. If the data signal has recently changed state, the pole tip will not have had sufficient time to become magnetically saturated in the last state. An aggressive write current pulse setting is used to quickly and effectively switch the pole tip from one saturated state to the opposite saturated state. A less aggressive setting is used to switch the pole tip from an unsaturated state. Another factor is the length of the data sequence between transitions to be recorded. In the case of single bit or very short following data sequence or a given state, an aggressive setting is used for faster magnetic switching. In the case of a long future sequence of a given state, a less aggressive setting is used.

The multi-level write current disclosed herein provides pronounced pole tip switching to ensure that data is properly written to a magnetic medium with a substantially constant track width and good bit-to-bit transitions, despite the non-linear magnetic switching behavior of the write head.

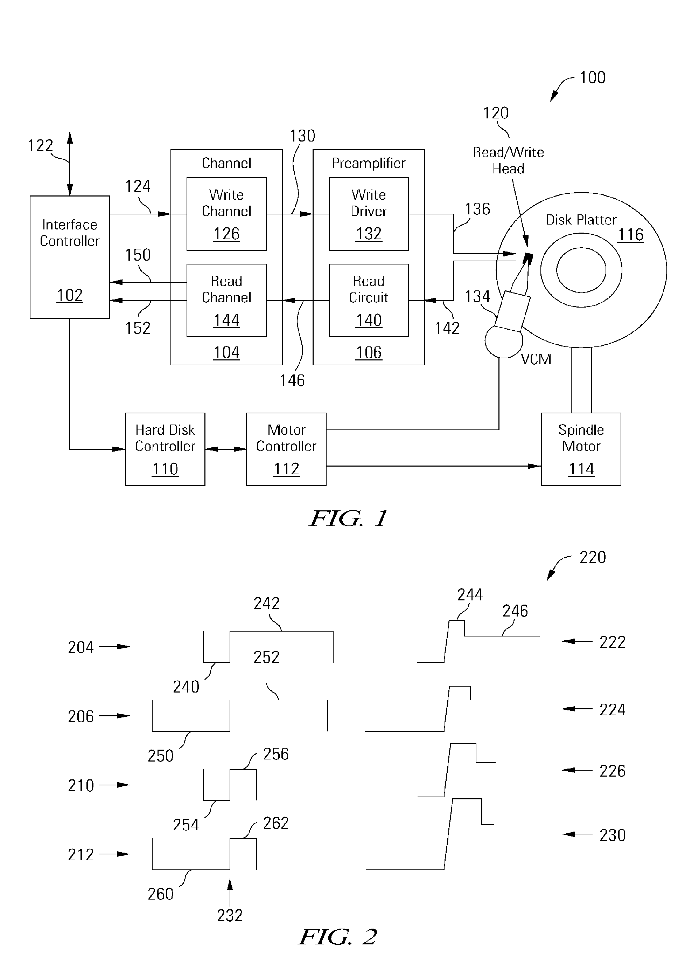

Although the magnetic recording with a multi-level write current disclosed herein is not limited to any particular application, one example application is a magnetic storage system 100 such as the hard disk drive illustrated in Fig. 1. Storage system 100 includes an interface controller 102, channel circuit 104, preamplifier 106, a hard disk controller 110, a motor controller 112, a spindle motor 114, a disk platter 116, and a read/write head assembly 120. Interface controller 102 controls addressing and timing of data to/from disk platter 116. The interface controller 102 may include devices such as a processor, buffer memory, format control, error correction circuits, and interface circuits. The data on disk platter 116 consists of groups of magnetic signals that may be written and detected by read/write head assembly 120 when the assembly is properly positioned over disk platter 116. In one embodiment, disk platter 116 includes magnetic signals recorded in accordance with either a longitudinal or a perpendicular recording scheme.

In a typical write operation, interface controller 102 receives digital data 122 to be stored on the disk platter 116 and provides corresponding digital write data 124 to a write channel 126 in the channel circuit 104. The digital data 122 may be received in serial form on a standardized device interface such as a Serial Advanced Technology Attachment (SATA) interface. During write operations, the digital data 122 is stored in a local buffer memory, formatted and augmented with error correction codes.

Write channel 126 may process the digital write data 124 in a number of ways, such as serializing the data, modulation coding the data and adding parity bits, serializing the data at the desired bit-rate, and performing write precompensation. The write channel 126 provides encoded write data 130 to a write driver 132 in preamplifier 106. In some embodiments, the preamplifier 106 is mounted on an actuator arm 134, and the encoded write data 130 is driven from the channel circuit 104 by a transmitter and delivered over a flex-cable in differential positive emitter-coupled logic (PECL) format to the write driver 132 in the arm-mounted preamplifier 106. The preamplifier 106 converts the encoded write data 130 to an analog signal, performs waveshaping, adds overshoot pulses to aid the recording process, and impresses in the write head portion of read/write head assembly 120 a bipolar programmable write current 136 of polarity determined by that of the PECL input. Characteristics of the overshoot pulses, including the level of the steady state current following the overshoot pulses, are controlled based on the initial magnetic state of the pole tip in the read/write head assembly 120.

In a typical read operation, read/write head assembly 120 is accurately positioned by motor controller 112 over a desired data track on disk platter 116. Motor controller 112 both positions read/write head assembly 120 in relation to disk platter 116 and drives spindle motor 114 by moving read/write head assembly 120 to the proper data track on disk platter 116 under the direction of hard disk controller 110. Spindle motor 114 spins disk platter 116 at a determined spin rate (RPMs). A read circuit 140 in the preamplifier 106 establishes a bias current in the magneto-resistive write head on read/write head assembly 120. Once read/write head assembly 120 is positioned adjacent the proper data track, magnetic signals representing data on disk platter 116 are sensed by read/write head assembly 120 as disk platter 116 is rotated by spindle motor 114. The sensed magnetic signals are provided as a continuous, minute analog signal 142 representative of the magnetic data on disk platter 116. This minute analog signal 142 is transferred from read/write head assembly 120 to read circuit 140 in the preamplifier 106, where it is amplified and is conveyed to a read channel 144 in the channel circuit 104 as analog read data 146. In turn, read channel 144 decodes and digitizes the received analog signal to recreate the user data originally written to disk platter 116, as well as extracting servo information.

As part of processing the analog read data 146, read channel circuit 802 may perform one or more operations such as analog filtering, variable gain amplification, analog to digital conversion, equalization, timing recovery, data detection, decoding, deserialization, and servo demodulation to obtain the user data and servo information. The user data is provided by read channel 144 as digital read data 150 to the interface controller 102, where it is error-corrected, stripped of special formatting fields, and reassembled in buffer memory for transmission to a user device as digital data 122. The read channel 144 also provides the servo data 152 to the interface controller 102 for use in driving the hard disk controller 110 and motor controller 112. During both the read and write operations, microcode in the interface controller 102 controls spindle speed and regulates head position to maintain accurate track-following and to seek between tracks. Servo position information for these functions is demodulated by the read channel 144 from dedicated fields prerecorded on the disk platter 116 at intervals between data records.

It should be noted that storage system 100 may be integrated into a larger storage system such as, for example, a RAID (redundant array of inexpensive disks or redundant array of independent disks) based storage system. It should also be noted that various functions or blocks of storage system 100 may be implemented in either software or firmware, while other functions or blocks are implemented in hardware. The various blocks disclosed herein may be implemented in integrated circuits along with other functionality. Such integrated circuits may include all of the functions of a given block, system or circuit, or only a subset of the block, system or circuit. Further, elements of the blocks, systems or circuits may be implemented across multiple integrated circuits. Such integrated circuits may be any type of integrated circuit known in the art including, but are not limited to, a monolithic integrated circuit, a flip chip integrated circuit, a multichip module integrated circuit, and/or a mixed signal integrated circuit. It should also be noted that various functions of the blocks, systems or circuits discussed herein may be implemented in either software or firmware. In some such cases, the entire system, block or circuit may be implemented using its software or firmware equivalent. In other cases, the one part of a given system, block or circuit may be implemented in software or firmware, while other parts are implemented in hardware.

Turning now to Fig. 2, the write current characteristics generated for various input data patterns are illustrated in accordance with some embodiments of the present invention. Again, by adapting the write current characteristics to the initial magnetic state of the pole tip, magnetization switching of the pole tip is controlled to improve recording performance. The initial magnetic state of the pole tip is determined in some embodiments by the most recently written data sequence. In the left column 202, four data sequences 204, 206, 210 and 212 are shown. In the right column 220, the four resulting write current waveforms 222, 224, 226 and 230 are shown. In other words, when data sequence 204 is to be received for writing, the write current waveform 222 will be used to magnetize the pole tip. In these examples, positive transitions 232 in the data 204, 206, 210 and 212 and resulting write current waveforms 222, 224, 226 and 230 are illustrated. However, corresponding negative transitions will also be used to generate write current waveforms with the characteristics controlled as illustrated in Fig. 2, although with the polarity inverted.

The first data sequence 204 includes a short prior sequence 240, which may comprise one or more '0's having been written immediately prior to the transition 232, with a long following sequence 242 to be written after the transition 232. Long following sequence 242 may comprise a series of '1's to be written beginning at the transition 232. The number of bits in short and long sequences are not limited to any specific values, because they may be adapted based on the data rate, the magnetic characteristics of the pole tip affecting time to magnetic saturation, etc. Short and long sequences are referred to in some embodiments disclosed herein as having durations of 1T and 2T, with the duration of 2T being twice as long as 1T. A 1T duration is defined in some embodiments as one bit cell, although in other embodiments a 1T duration may be defined to contain more than one data bit.

The write current 222 through the pole tip resulting from data sequence 204 will have a weak overshoot setting, meaning that a small overshoot pulse 244 will be generated, followed by a steady state write current level 246. Because of the short prior sequence 240, the pole tip will not have been saturated before the transition 232, and because of the long following sequence 242 the pole tip will not need to be forced into magnetic saturation quickly. Because of the combination of these two factors, a weak overshoot setting is used for write current 222. Again, a variety of characteristics of the write current may be controlled, including but not limited to overshoot amplitude, overshoot duration, steady state current I_{W}, current rise time, etc. These characteristics are referred to herein in the aggregate in terms of overshoot strength, such as the weak overshoot setting of write current 222.

Data sequence 206 includes a long prior sequence 250 and a long following sequence 252. In this case, the pole tip will have been saturated prior to the transition 232, but balanced against this is the long following sequence 252. A conventional overshoot setting is used in the resulting write current 224. Data sequence 210 includes a short prior sequence 254 and a short following sequence 256. In this case, the pole tip will not have been saturated prior to the transition 232, but balanced against this is the short following sequence 252. An aggressive overshoot setting is used in the resulting write current 226. Data sequence 212 includes a long prior sequence 260 and a short following sequence 262. In this case, the pole tip will have been saturated prior to the transition 232, and the following sequence 252 is short. Because of the combination of these two factors, a super-aggressive overshoot setting is used in the resulting write current 230.

The write current characteristics versus data sequence characteristics of some embodiments are summarized in Table 1 below:

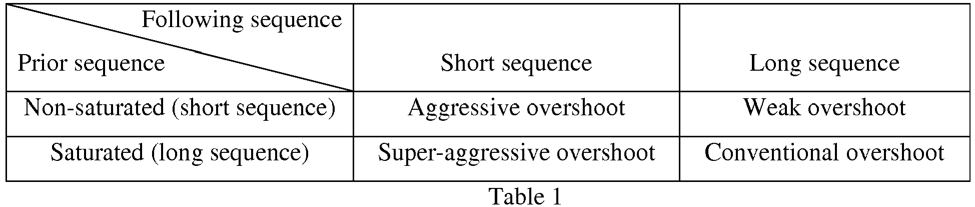

In some embodiments, the example four overshoot settings set forth in Table 1 are used. In other embodiments, more or fewer overshoot settings are used based on various characteristics that indicate the magnetic state of the pole tip. For example, data sequences may be divided with additional granularity, enabling additional overshoot settings to be used. In other embodiments, the data sequences of Fig. 2 may result in fewer overshoot settings, for example grouping data sequences 204, 206 and 210 and using a weaker overshoot setting and using a stronger overshoot setting for data sequence 212.

Again, the particular characteristics of the overshoot settings for the write current, such as the overshoot amplitude, overshoot duration, steady state current I_{W}, and current rise time, are not limited to any particular values. The overshoot setting state, whether weak, conventional, aggressive or super-aggressive, may prescribe the levels of one or more of these or other write current characteristics. Write head switching is a particularly complicated process that affects overall recording performance in magnetic recording systems. Switching of a pole tip in the write head is initiated by the magnetic field from a coil wrapped around the pole tip. Rapid switching of the pole tip magnetization is a bottleneck for a fast write process. The write current passing through the coil and the magnetization state of the pole tip (and, hence, the magnetic field affecting switching of the bits on the disk platter) are related non-linearly due to the characteristics of the magnetic medium and the intrinsic time scale of the magnetization process. During the magnetic switching process of the pole tip, domain wall (DW) nucleation initiates the switching process in a time frame on the order of about 200-300 picoseconds. Next, magnetization switching occurs by the DW propagating with finite velocity, on the order of about 100-300 picoseconds. Finally, magnetization saturation finalizes the switching process by achieving magnetic alignment for a period on the order of about 0.5-1 nanoseconds. As a result, magnetic response is significantly delayed in time (200-500 picoseconds) from the write current and has a saturation wave shape which is different from the write current. Thus, the particular characteristics of the multi-level write current are adapted to the characteristics and requirements of the magnetic recording system, including the magnetic characteristics of the pole tip and the magnetic data storage medium or disk platter, the rate at which the data is written, the areal density for data storage on the magnetic medium, etc.

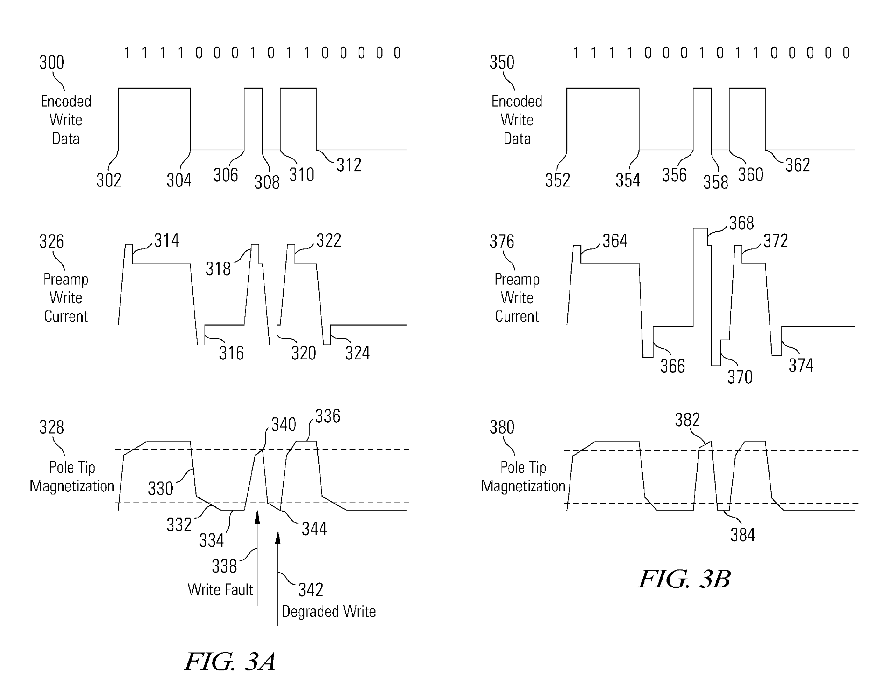

Turning now to Figs. 3A and 3B, examples are illustrated for the magnetic fields generated at the pole tip for particular data sequences and write currents, both with the multi-level write current system disabled (Fig. 3A) and enabled (Fig. 3B). In this example, the 1T period corresponds to a single data bit period. Referring first to Fig. 3A in which the multi-level write current system is disabled, a stream 300 of encoded write data includes the values "1111000101100000". For each of the transitions 302, 304, 306, 308, 310 and 312, a corresponding overshoot pulse 314, 316, 318, 320, 322 and 324 is generated in the preamplifier write current 326 to the coil in the write head. The pole tip magnetization 328 may be said to have three stages for one write pulse, stage one 330 with DW motion, stage two 332 entering saturation, and stage three 334 in saturation. (The levels at which a "1" or "0" is written to the magnetic medium are identified by dashed horizontal lines.) Notably, transition 310 in the encoded write data 300 has a short prior data sequence ('0') and a long following data sequence ('11'), allowing the pole tip magnetization 328 to reach saturation 336. However, transition 306 has a long prior data sequence ('000') and a short following data sequence ('1'), resulting in a write fault 338 in which the pole tip magnetization 328 reaches a level 340 that falls short of saturation. Similarly, transition 308 has a short prior data sequence ('1') with a short following data sequence ('0'), resulting in a degraded write 342 when the pole tip magnetization is cut short by the next transition 310 when still at a level 344 just at saturation.

Turning to Fig. 3B, the multi-level write current system is enabled, and the stream 350 of encoded write data again includes the values "1111000101100000". For each of the transitions 352, 354, 356, 358, 360 and 362, a corresponding overshoot pulse 364, 366, 368, 370, 372 and 374 is generated in the preamplifier write current 376 to the coil in the write head. Notably, with the multi-level write current system enabled, the various overshoot settings are applied in the preamplifier write current 376. Transition 354 has a long prior data sequence and a long following data sequence, so overshoot pulse 366 has a conventional overshoot setting, as indicated in Table 1 and Fig. 2. Transition 356 has a long prior data sequence and a short following data sequence, so corresponding overshoot pulse 368 has a super-aggressive overshoot setting. Transition 358 has a short prior data sequence and a short following data sequence, so corresponding overshoot pulse 370 has an aggressive overshoot setting. Transition 360 has a short prior data sequence and a long following data sequence, so corresponding overshoot pulse 372 has a weak overshoot setting. Transition 362 has a long prior data sequence and a long following data sequence, so corresponding overshoot pulse 374 has a conventional overshoot setting. As a result of the variations in the settings of the overshoot pulses (e.g., 366, 368, 370, 372 and 374), the pole tip magnetization 380 fully reaches the saturated state for long enough to properly store the data bits on the magnetic medium, for example at locations 382 and 384 which produced errors when the multi-level write current system was disabled.

Again, the characteristics adjusted in the preamplifier write current 376 based on overshoot setting are not limited to those disclosed herein, but may include overshoot pulse amplitude and width and steady state current level, among others. For example, super-aggressive overshoot pulse 368 has a greater overshoot pulse amplitude and width and a higher steady state current level than conventional overshoot pulse 366.

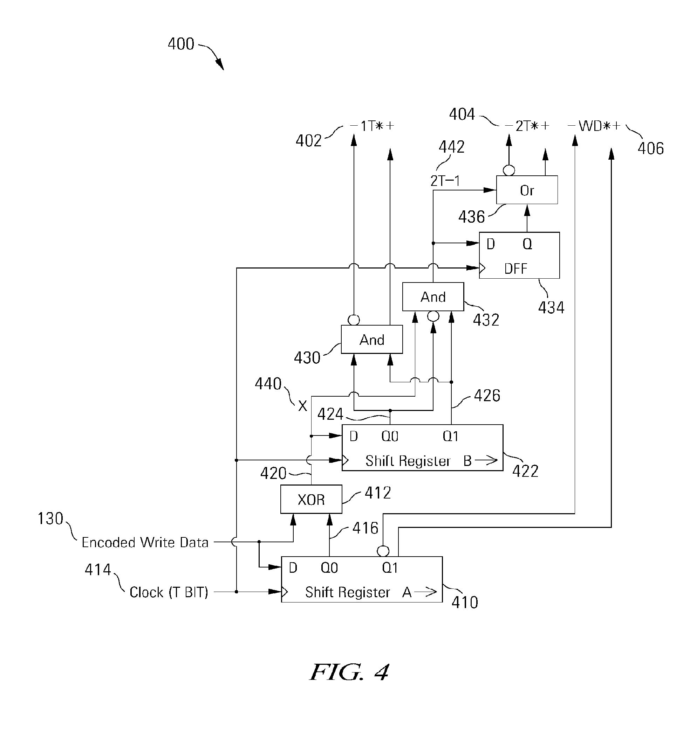

In various embodiments, the length of the prior data sequence and following data sequence may be determined in the channel circuit 104 or the preamplifier 106 or in other components. Turning to Fig. 4, in one example embodiment, a pattern detection circuit 400 is located in write driver 132 and parses encoded write data 130 to identify the length of data sequences between transitions. The pattern detection circuit 400 produces three differential signals, a 1T* signal 402, a 2T* signal 404 and a WD* signal 406. The 1T* signal 402 indicates when the encoded write data 130 remains in a particular state only for the duration of one T period, and the 2T* signal 404 indicates when the encoded write data 130 remains in a particular state only for the duration of two T periods. When neither the 1T* signal 402 nor the 2T* signal 404 are active, the encoded write data 130 is in a particular state for longer than two T periods. The 1T* signal 402 and 2T* signal 404 are delayed by two T periods. The WD* signal 406 provides a version of the encoded write data 130 that is delayed by two T periods to be in alignment with the 1T* signal 402 and the 2T* signal 404. Although the example pattern detection circuit 400 of Fig. 4 assigns only three pattern-dependent write current levels (for 1T, 2T and ≥ 3T, the pattern detection circuit 400 may be adapted to identify fewer or more levels. Encoded write data 130 is parsed for polarity changes or transitions by a 1T delay in shift register 410 and XOR gate 412. The shift registers and flip flops in pattern detection circuit 400 are clocked at a T_{BIT} interval clock 414. If write precompensation is applied, it may be implemented as a positional modulation of the T_{BIT} - period clock edges. If the current bit of encoded write data 130 and a 1T delayed bit from output Q0 416 of shift register 410 are different, output X 420 of XOR gate 412 will be asserted. Output X 420 is used as input to shift register 422. Output Q0 424 and output Q1 426 of shift register 422 are combined in AND gate 430. Because output X 420 of XOR gate 412 indicates a changed state in encoded write data 130 from a current bit period and a previous bit period, if output Q0 424 and output Q1 426 from shift register 422 are both asserted, this indicates that three successive bit periods have different values, and thus that the current bit period has held a particular value for only one T period, asserting differential 1T* signal 402. Output X 420 of XOR gate 412 is combined in NAND gate 432 with inverted output Q0 424 and output Q1 426 from shift register 422. If all three are true, the encoded write data 130 held the same bit value for two T periods but was different three T periods ago. A D flip flop 434 and OR gate 436 are used to hold the 2T* signal 404 asserted for two T periods rather than just a single T period when the two T sequence in encoded write data 130 is detected. In some embodiments, the 1T* signal 402, the 2T* signal 404 and the WD* signal 406 may be resynchronized to the T_{BIT} clock 414 by passing them through an additional flip-flop rank (not shown) to eliminate skews.

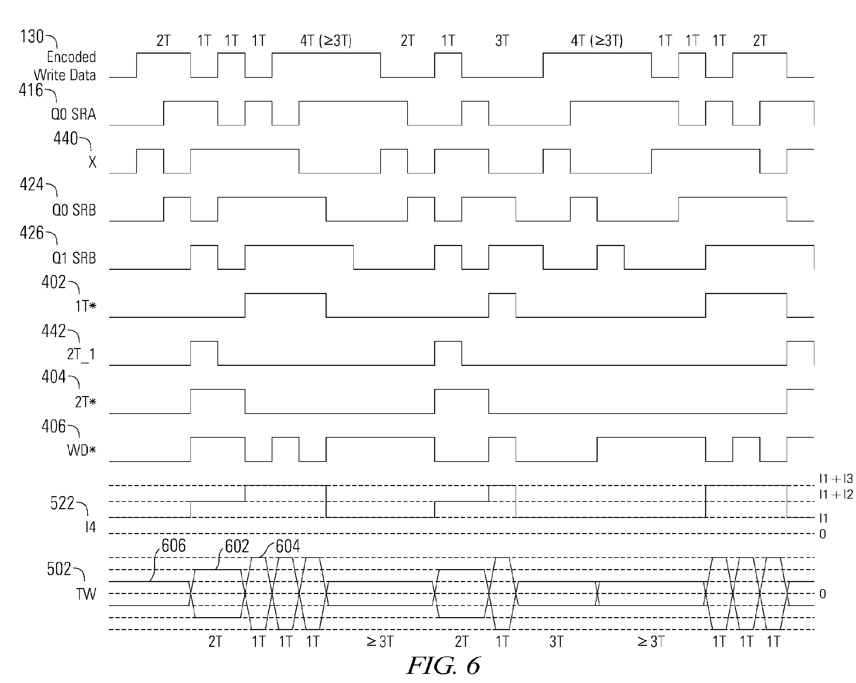

The behavior of pattern detection circuit 400 is shown in the timing diagrams of Fig. 6. The output Q0 416 of shift register 410 corresponds with the encoded write data 130, delayed by 1T in shift register 410, which is clocked by clock 414 at an interval of 1T. Node X 440 is the XOR of encoded write data 130 and output Q0 416 from shift register 410. The output Q0 424 of shift register 422 corresponds with the signal at X 440 , delayed by 1T in shift register 422, which is also clocked by clock 414 at an interval of 1T. The output Q1 426 of shift register 422 corresponds with the signal at X 440 , delayed by 2T in shift register 422. The WD* signal 406 corresponds with the encoded write data 130, with the same 2T delay as the 1T* signal 402 and 2T* signal 404 as they are generated in pattern detection circuit 400. The 1T* signal 402 is asserted when the WD* signal 406 is in a particular state for 1T, when output Q0 424 and output Q1 426 are both high. Intermediate signal 2T-1 442 goes high for 1T when the WD* signal 406 is in a particular state for 2T, when signal X 440 and output Q1 426 are high and when output Q0 424 is low. The 2T* signal 404 corresponds with signal 2T-1 442 but remains high for 2T while the WD* signal 406 is in a particular state for 2T.

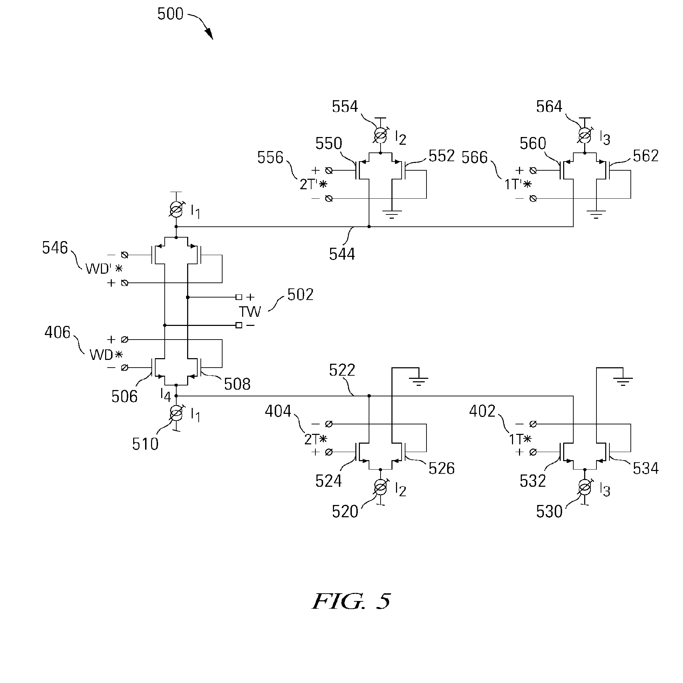

Turning to Fig. 5, a multi-level differential signal generator circuit 500 is illustrated in accordance with some embodiments of the present invention. In one example embodiment, the multi-level differential signal generator circuit 500 is located in write channel 126 and produces a multi-level ternary signal TW 502 based on 1T* signal 402, 2T* signal 404 and WD* signal 406. The ternary signal TW 502 may be transmitted from the write channel 126 in channel circuit 104 to the write driver 132 in preamplifier 106 as an indication of the state of the pole tip and the data being written, enabling the write driver 132 to apply the appropriate multi-level write current to the pole tip. The ternary signal TW 502 or other signal provides a representation of the state of the pole tip and is also referred to herein as a pattern indicator signal. The example embodiment of a multi-level differential signal generator circuit 500 illustrated in Fig. 5 is a current-mode CMOS logic output stage, however, a ternary signal TW 502 or other indication of the state of the pole tip may be generated in any suitable circuit or device in alternative embodiments. A long-tailed pair 504 includes transistors 506 and 508 to control the flow of total tail current I4 from common tail current source 510 and supplementary tail current sources 520 and 530 to the ternary signal TW 502. The first supplemental tail current source 520 is connected to tail current node 522, steered toward or away from tail current node 522 by differential pair transistors 524 and 526 controlled by the 2T* signal 404. The second supplemental tail current source 530 is connected to tail current node 522, steered toward or away from tail current node 522 by differential pair transistors 532 and 534 controlled by the 1T* signal 402. In the embodiment of Figs. 5 and 6, I₁ from tail current source 510 < I₂ from first additional tail current source 520 < I₃ from second additional tail current source 530.

In operation, the WD* signal 406 is applied to current-routing pair 506 and 508, thus causing current to be directed according to the polarity of the NRZ encoded write data 130 into one or the other of the ternary signal TW 502 output, which in some embodiments comprise a pair of flex-cable conductors. In the absence of any 1T or 2T runs in the encoded write data 130, transistors 506 and 508 switch the tail current from tail current source 510 between the ternary signal TW 502 outputs. When the 2T* signal 404 is asserted during a 2T run, the current at tail current node 522 from tail current source 510 is supplemented by the current from the first additional tail current source 520. Similarly, when the 1T* signal 402 is asserted during a 1T run, the current at tail current node 522 from tail current source 510 is supplemented by current from the second additional tail current source 530. The current waveform at tail current node 522 is illustrated in Fig. 6. The particular current levels of current sources 510, 520 and 530 are not limited to those illustrated in Fig. 6, or even to the relative levels illustrated in Fig. 6, but may be set to any suitable level enabling a receiving circuit in the preamplifier 106 to distinguish the different pole tip states and/or run lengths in encoded write data 130. The resulting ternary signal TW 502 is also illustrated in Fig. 6.

To achieve a symmetrical differential output waveform TW 502, a complementary portion of multi-level differential signal generator circuit 500 constructed of P-type devices mirrors the N-type devices 506, 508, 524, 526, 532 and 534 disclosed above. P-type transistors 540 and 542 switch complementary to transistors 506 and 508, steering tail current from node 544 to ternary signal TW 502 under the control of WD'* signal 546. P-type transistors 550 and 552 are counterparts to N-type transistors 524 and 526, switching current from additional tail current source 554 to tail current node 544 under the control of 2T'* signal 556. P-type transistors 560 and 562 are counterparts to N-type transistors 532 and 534, switching current from additional tail current source 564to tail current node 544 under the control of 1T'* signal 566. Control signals WD'* signal 546, 2T'* signal 556 and 1T'* signal 566 switch simultaneously with WD* signal 406, 2T* signal 404 and 1T* signal 402, although they may be level shifted as will be understood by one of ordinary skill in the art.

Notably, the multi-level differential signal generator circuit 500 is adapted to provide a symmetrical ternary waveform TW 502 about the common-mode voltage, identified as level '0' for the waveform of ternary signal TW 502 in Fig. 6. However, various embodiments of the multi-level write current system may use alternative circuits or devices to generate a ternary waveform or to otherwise communicate the various states to the write driver 132. For example, the example embodiment of multi-level differential signal generator circuit 500 is implemented as stacked current switches. In alternative embodiments, it is implemented as a triplet of one-level switches accompanied by appropriate logic gating, with possible omission of the P-type complementary portion, particularly when supply headroom is problematic.

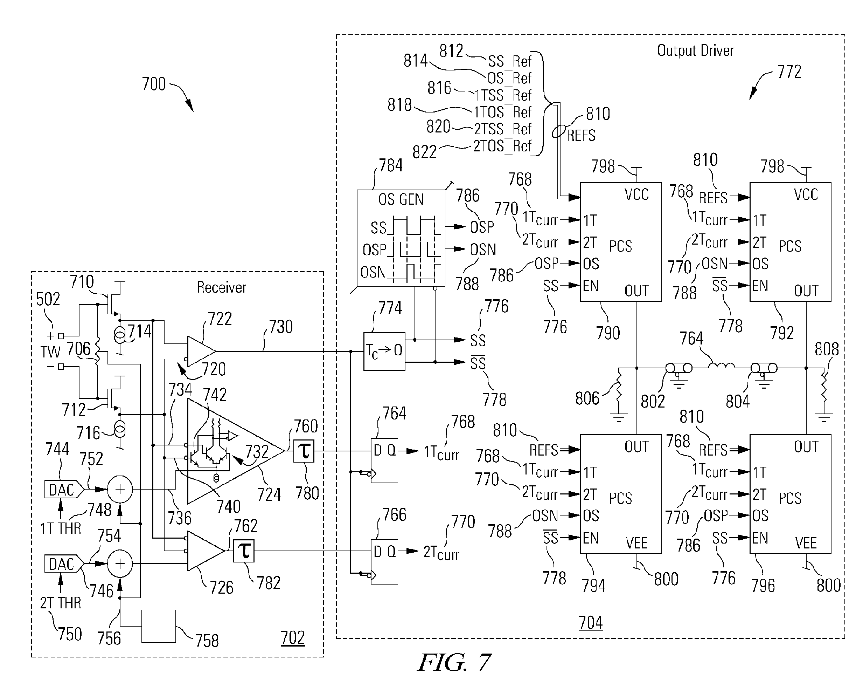

The multi-level differential signal generator circuit 500 delivers a three-level differential signal ternary signal TW 502 to write driver 102 located within preamplifier 106 over flex-cable conductors or other suitable conductors (see 130, Fig. 1). In other embodiments, as disclosed above, the pattern detection circuit 400 may detect more or less than the example disclosed number of states, leading to other numbers of levels in the ternary signal TW 502. From a base (for runs in encoded write data 130 ≥ 3T) peak to peak differential level of 2·I₁·R_{T} in ternary signal TW 502, the signal voltage rises by 2·I₂·R_{T} for 2T runs, and by 2·I₃·R_{T} for 1T runs. (R_{T} is the resistance of terminating resistor 706 in Fig. 7, I₁ is the current from tail current source 510, I₂ is the current from first additional tail current source 520, and I₃ is the current from second additional tail current source 530.) I₁, I₂ and I₃ may be either fixed or variable.

Turning to Fig. 7, a multi-level write driver 700 with multi-level differential signal receiver 702 and output driver 704 is disclosed that may be used in a preamplifier circuit 106 in accordance with some embodiments of the present invention. The write driver 700 may be suitable for use in place of the write driver 132 of Fig. 1. Magnetic write driver features such as head degauss that may also be included in a multi-level write driver, as will be understood by those of ordinary skill in the art, are omitted from the write driver 700 illustrated in Fig. 7 for clarity. The receiver 702 receives the ternary signal TW 502 into a buffer/terminator stage made up of termination resistor 706and buffer transistors 710 and 712 and current sources 714 and 716 to yield a buffered ternary signal 720. Termination resistor 706 has total resistance R_{T}=Z₀, where Z₀ is the characteristic impedance of interconnect 130 in Fig. 1. Termination resistor 706 is center-tapped, with the midpoint taken to a common-mode voltage reference set by an internal voltage source 758. The buffered ternary signal 720 is provided to a high-speed zero-crossing comparator 722 and to two slicers 724 and 726. The output 730 of the zero-crossing comparator 722 governs transition placement and functions as a master timing channel, reducing any need for tight skew control over multiple paths in the preamplifier 106 and for rise time-induced time-to-threshold shifts.

The slicers 724 and 726 have thresholds independently established as programmable shifts above common-mode voltage. The slicers are constructed in some embodiments with absolute-value-sensing inputs with an input differential pair 732 having on one side two (oppositely poled signal) terminals 734 and 736 at the bases of two parallel transistors to receive the oppositely poled buffered ternary signal 720, and on the other side a reference input 740 at the base of a third transistor 742. Thresholds for the slicers 724 and 726 are set by digital to analog converters 744 and 746. Digital to analog converter 744 is programmed by threshold signal 748 to a level midway between the 2T run level 602 (Fig. 6) and the 1T run level 604. Digital to analog converter 746 is programmed by threshold signal 750 to a level midway between the baseline (≥3T) run level 606 and the 2T run level 602. The slice levels are instrumented by summing each of the outputs 752 and 754 of digital to analog converters 744 and 746 with the common-mode voltage signal 756 of the buffered ternary signal 720 provided by common mode voltage source 758. In some cases, adaptive slicing and input level tracking may be achieved by using a peak detector (not shown) to obtain tracking clip levels or to control an initial variable gain amplifier (not shown). In yet other cases, slice levels can be hard-wired.

From the receiver 702, the output 730 of the zero-crossing comparator 722 and outputs 760 and 762 of slicers 724 and 726 are provided to output driver 704 which switches current in the write head 764. (The write head 764 is located outside of the preamplifier 106 in some embodiments, with flex-on-suspension (FOS) connectors between the write head 764 and the write driver 700.) Multi-head preamplifiers may be provided with a separate output driver for each write head. The zero-crossing comparator 722 clocks two bi-directionally clocked flip-flops 764 and 766 to produce time-aligned enable signals 1Tcurr 768 and 2Tcurr 770 to synchronize write current flow in the portions of the driver bridge 772 responsible for 1T and 2T current augmentation. (The bi- directionality of flip flops 764 and 766 is signified in Fig. 7 by parallel inverted/non-inverted clock input terminals.) The output 730 of the zero-crossing comparator 722 is also built-out in delay element 774 with delay equivalent to the C→Q delay of flip flops 764 and 766, yielding steady state enable signals SS 776 and S̅S̅ 778. Delay elements 780 and 782 may be inserted in some embodiments into the slicer outputs 760 and 782 to ensure satisfactory setup/hold times on the flip flops 764 and 766. Resynchronization in this fashion alleviates the need in the core-to-headcell routing in the preamplifier 106 and read/write head assembly 120 to enforce stringent time matching.

The steady state enable signals SS 776 and S̅S̅ 778 are provided to a bidirectional overshoot generator 784, which generates programmable-width overshoot pulses OSP 786 and OSN 788, initiated respectively by the rising and falling edges of enable signal SS 776. The five signals 1Tcurr 768, 2Tcurr 770, OSP 786, OSN 788 and SS 776 jointly control the preamplifier's writer output driver 704, which is configured as a conventional bridge 772 enhanced to support multi-level writing. The bridge 772 comprises four similar Power Current Source PCS cells 790, 792, 794 and 796. The identical 'high' PCS cells 790 and 792, identical in some embodiments, are referenced to the positive (VCC) supply 798. Their 'low' counterpart PCS cells 794 and 796, identical to each other in some embodiments and with negative polarity with respect to 'high' PCS cells 790 and 792, are referenced to the negative (VEE) rail 800. The SS signal 776 and its complement S̅S̅ 778, both originating in the zero-crossing comparator 722, activate diametrically opposed PCS cells (790 and 796, 792 and 794, respectively), thus controlling write current polarity toggling. Enabling of PCS cells 790 and 796 provides 'positive' head current whereas enabling of PCS cells 792 and 794 provides 'negative' head current.

The write head 764 is joined to the preamplifier 106 by a transmission line or flex-on-suspension conductors 802 and 804 (signified by element 130 in Fig. 1); accordingly resistors 806 and 808 may be provided in the write driver 700 or elsewhere in the preamplifier 106 for termination and reflection absorption. The resistors 806 and 808 are shown as ground-referenced, a suitable choice for |VCC| = |VEE|, with the aggregate value of resistors 806 and 808 equal to the characteristic impedance (Z₀) of transmission line 802, although they are not limited to this configuration.

Six current reference signals 810, including SS_Ref 812, OS_Ref 814, 1TSS_Ref 816, 1TOS_Ref 818, 2TSS_Ref 820, and 2TOS_Ref 822, are delivered to the PCS cells 790, 792, 794 and 796 to establish write current magnitudes. The current reference signals 810 are defined as follows:
SS_Ref 812: steady-state baseline write current (for run length ≥ 3T)
OS_Ref 814: overshoot baseline write current (for run length ≥ 3T)
1TSS_Ref 816: incremental steady-state current above SS_Ref 812 (for run length = 1T)
1TOS_Ref 818: incremental overshoot current above OS_Ref 814 (for run length = 1T)
2TSS_Ref 820: incremental steady-state current above SS_Ref 812 (for run length = 2T)
2TOS_Ref 822: incremental overshoot current above OS_Ref 814 (for run length = 2T)

The current reference signals 810 may be derived from digital to analog converters (not shown) shared by all headcells, and support independently programmable values of steady-state (SS) and overshoot (OS) write currents for each of 1T, 2T, and ≥3T run lengths.

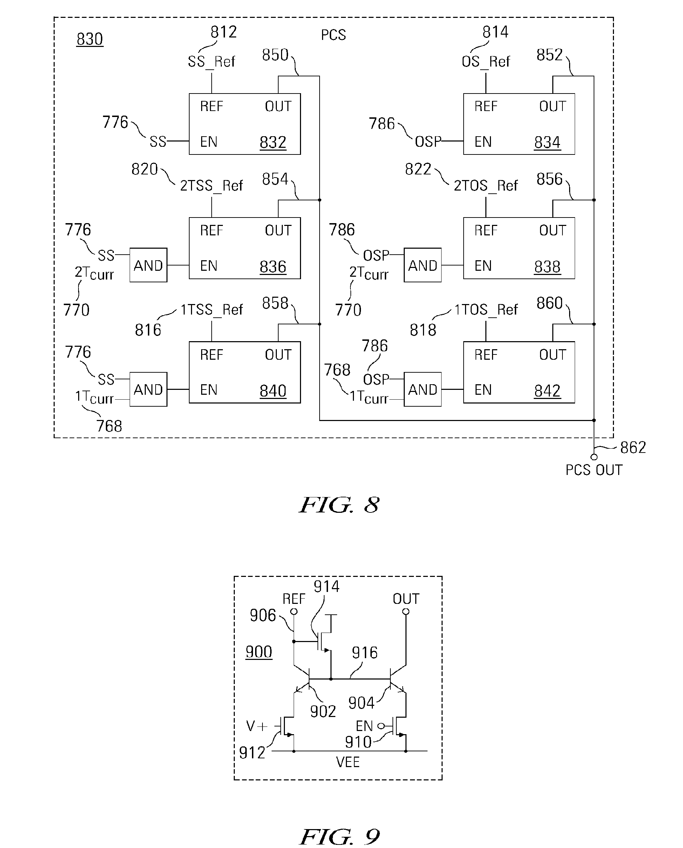

Turning to Fig. 8, a simplified diagram of a low-side PCS cell 830 is illustrated in accordance with some embodiments of the invention, suitable for use in place of PCS cell 796. The PCS cell 830 comprises six current mirrors 832, 834, 836, 838, 840 and 842 and associated gating/enabling logic keyed off the SS signal 776 and OSP signal 786. Outputs 850, 852, 854, 856, 858 and 860 of current mirrors 832, 834, 836, 838, 840 and 842 each contribute current to PCS cell output 862 when their current mirror is enabled. Current mirror 832 provides the SS_Ref 812 reference current at the output 850 when the SS signal 776 is asserted. Current mirror 834 provides the OS_Ref 814 reference current at the output 852 when the OSP signal 786 is asserted. Current mirror 836 provides the 2TSS_Ref 820 reference current at the output 854 when the SS signal 776 and the 2Tcurr signal 770 are both asserted. Current mirror 838 provides the 2TOS_Ref 822 reference current at the output 856 when the OSP signal 786 and the 2Tcurr signal 770 are both asserted. Current mirror 840 provides the 1TSS_Ref 816 reference current at the output 858 when the SS signal 776 and the 1Tcurr signal 768 are both asserted. Current mirror 842 provides the 1TOS_Ref 818 reference current at the output 860 when the OSP signal 786 and the 1Tcurr 768 are both asserted. In some embodiments, current summation is performed at the input to a fast current mirror rather than at the outputs of multiple current mirrors.

Turning to Fig. 9, a switched current mirror 900 is illustrated suitable for use as one of the current mirrors 832, 834, 836, 838, 840 or 842 of Fig. 8 in accordance with some embodiments of the present invention. In some embodiments, as shown in Fig. 9, the switched current mirror 900 is a BiCMOS emitter-enabled current mirror with bipolar transistors 902 and 904 operating when off in the BVcbo regime. Some other embodiments include current-routing all-bipolar pairs with currents set by emitter degeneration and the voltage level to which the bases are switched. The switched current mirror 900 is supplied through a current reference input 906 by one of the six current reference signals 810, including SS_Ref 812, OS_Ref 814, 1TSS_Ref 816, 1TOS_Ref 818, 2TSS_Ref 820, and 2TOS_Ref 822. A CMOS enable transistor 910 is connected in series with the output bipolar transistor 904, controlled by the SS signal 776, the OSP signal 786 or a combination of the SS signal 776, the OSP signal 786, the 1Tcurr signal 768 and the 2Tcurr signal 770 as shown in Fig. 7. A dummy CMOS transistor 912 is connected in series with the input bipolar transistor 902 to account for the finite resistance of the enable transistor 910 so that current amplitude is correctly reproduced in the switched current mirror 900. Transistor 914 is connected between current reference input 906 and the common base node 916, connecting input bipolar transistor 902 in high-speed diode fashion. Device sizes may be scaled appropriately to maximum current levels in each mirror.

The high-side PCS cells 790 and 792 are similar but use complementary-polarity devices using PMOS and PNP devices instead of the NMOS and NPN devices of Fig. 9.

For clarity, Figs. 7 and 8 omit level-shifters which may be used to translate or reference the bridge control signals to VCC / VEE rail potentials. Although a 'current mode' architecture is described, alternative embodiments that support multi-level write currents are within the scope of the invention. The multi-level write current scheme may be extended to permit run length dependent control of overshoot width, or may be simplified to omit one or more write current levels.

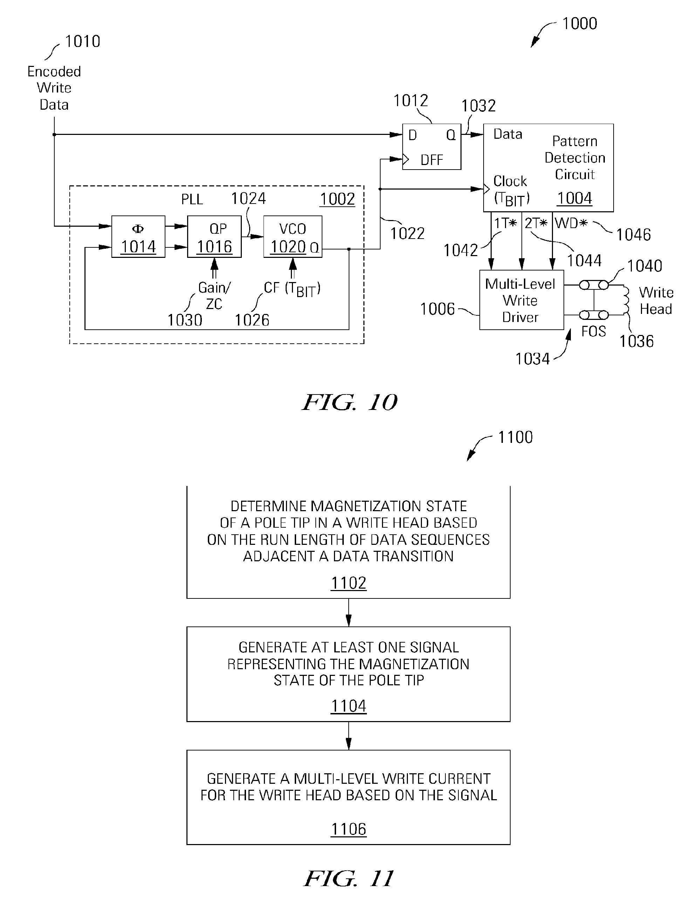

Turning to Fig. 10, another embodiment of a preamplifier 1000 including a phase locked loop 1002, pattern detection circuit 1004 and multi-level write driver 1006 is illustrated in which multi-level write control is performed in the preamplifier without special circuitry in the channel circuit. Thus, the advantages of multi-level writing can be secured when using conventional recording channels. Binary NRZ encoded write data 1010 is received from a channel in the preamplifier 1000 by a PECL receiver (not shown) and is delivered to phase locked loop (PLL) 1002 and staticizor 1012, a low setup/hold time D flip flop clocked by the phase locked loop 1002 at the center of the bitcell period. The phase locked loop 1002 includes a phase detector 1014, a charge pump 1016 and a voltage controlled oscillator 1020. As the phase detector 1014 detects a difference in the clock 1022 produced by phase locked loop 1002 and the encoded write data 1010, it controls the charge pump 1016 to produce a higher or lower voltage at output 1024. The phase and/or frequency of the clock 1022 is controlled by the voltage controlled oscillator (VCO) 1020 in response to the voltage at the output 1024 of the charge pump 1016. To accommodate a wide range of data rates, the VCO center frequency 1026 and PLL loop gain 1030 are made programmable through user-settable registers within the preamplifier. In some embodiments, the encoded write data 130 will have been run-length coded by the channel in to aid clock recovery during data read back; accordingly clock extraction in phase locked loop 1002 may utilize a transition-sensitive phase detector of Alexander or Hogge varieties. The voltage controlled oscillator 1020 operates at the bit rate.

To allow rapid Read-to-Write mode transition times, the encoded write data 1010 may be driven with a constant-frequency pattern sufficiently in advance of the Write operation as to permit the phase locked loop 1002 to attain lock, referred to herein as anticipatory lock-in.

The output 1032 of staticizor 1012 and the clock 1022 are provided to pattern detection circuit 1004, which in some embodiments is fabricated as in Fig. 4. The preamplifier 1000 may be fabricated in high-performance SiGe BiCMOS processes containing fast CMOS devices of speed sufficient to realize the multilevel-pattern-detection logic.

The phase locked loop 1002, staticizor 1012 and pattern detection circuit 1004 are located in some embodiments in the core circuitry of the preamplifier 1000, and serve multiple Headcells. Each Headcell contains a multi-level write driver 1006, which in some embodiments is fabricated as in Fig. 7. The output 1034 of multi-level write driver 1006 is applied to write head 1036, for example over a flexible transmission line (FOS) 1040 as disclosed above.

The interface between pattern detection circuit 1004 and multi-level write driver 1006 may be embodied as in Figs. 5 and in receiver 702 of Fig. 7 using a ternary waveform. In other embodiments, a 1T* signal 1042, 2T* signal 1044 and WD* signal 1046 provided by a pattern detection circuit 1004 such as that in Fig. 4 may be processed directly by the multi-level write driver 1006 without the use of an intermediate ternary waveform transmission, since no flexible transmission line is needed between the pattern detection circuit 1004 and the multi-level write driver 1006 as is used in some embodiments between the channel circuit 104 and preamplifier 106.

In some embodiments, the pattern detection circuits 400 and 1004 may include write precompensation circuits.

The pattern detection circuit 400, multi-level differential signal generator circuit 500, and write driver 700 including receiver 702 and driver bridge 772 disclosed above and illustrated in Figs. 4-10 detects the length of a run after a particular transition (or following sequence) and adjusts the overshoot level at the transition. Characteristics that may be controlled include but are not limited to overshoot pulse amplitude and width and steady state current level, differentiating between levels for following sequences of 1T, 2T, or 3T or longer. These embodiments may also be used to control overshoot level at the transition based on prior sequences by including a buffer (not shown) in the preamplifier 106 and delaying the write data by several T periods so that the run length of both prior and following sequences are known when the overshoot pulse is generated for the transition.

Turning to Fig. 11, a flow diagram 1100 shows a method for recording data in a magnetic storage device with a multi-level write current in accordance with some embodiments of the present invention, for example in a channel circuit 104 and preamplifier 106 such as in the storage system 100 of Fig. 1. Following flow diagram 1100, the magnetization state of a pole tip in a write head is determined based on the run length of data sequences adjacent a data transition. (Block 1102) At least one signal is generated representing the magnetization state of the pole tip. (Block 1104) The signal may represent the magnetization state of the pole tip directly or may be based on the prior data sequence and/or following data sequence adjacent the data transition to represent the magnetization state of the pole tip indirectly. A multi-level write current is generated for the write head based on the signal. (Block 1106)

The magnetic recording system with multi-level write current disclosed herein enables high density data patterns to be recorded on a magnetic medium with higher quality by adapting the write current to the magnetization state of the pole tip, based in some embodiments on data patterns being written. Magnetic transitions have less prominent curvatures during transitions, providing better bit-to-bit transitions and less track width modulation.

In conclusion, the present invention provides novel apparatuses, systems, and methods for magnetic recording with a multi-level write current. While detailed descriptions of one or more embodiments of the invention have been given above, various alternatives, modifications, and equivalents will be apparent to those skilled in the art without varying from the spirit of the invention. Therefore, the above description should not be taken as limiting the scope of the invention, which is defined by the appended claims.

## Claims

1. An apparatus for magnetic recording with a multi-level write current waveform comprising:
a magnetic write head (764);
a pattern detection circuit (400) operable to detect patterns in data to be written by the magnetic write head (764) and to yield a pattern indicator signal (502); and
a write driver (132) operable to generate the multi-level write current waveform for the magnetic write head(764), wherein at least one electrical characteristic of the multi-level write current waveform is based upon the patterns detected by the pattern detection circuit (400).

2. The apparatus of claim 0, wherein the patterns in the data to be written by the magnetic write head (764) represent a magnetic saturation level of the magnetic write head (764); and/or wherein the write driver (132) is operable to generate a first write current level for a transition in the data to be written when the magnetic saturation level of the magnetic write head (764) is above a particular saturation level and to generate a second write current level when the magnetic saturation level of the magnetic write head (764) is below the particular saturation level, wherein the first write current level is more aggressive than the second write current level.

3. The apparatus of claim 0 or 2, wherein the pattern detection circuit (400) is operable to detect at least a first run length and a second run length in the data to be written by the magnetic write head (764).

4. The apparatus of any preceding claim, wherein the pattern detection circuit (400) is operable to detect whether data preceding a transition remains unchanged longer than a first duration and whether data following the transition will remain unchanged longer than a second duration.

5. The apparatus of claim 4, wherein the first duration and the second duration comprise a bit period in the data to be written by the magnetic write head (764).

6. The apparatus of claim 4, wherein the write driver (132) is operable to generate the multi-level write current waveform with first characteristics when the data preceding the transition does not remain unchanged longer than the first duration and the data following the transition does remain unchanged longer than the second duration;
wherein the write driver (132) is operable to generate the multi-level write current waveform with second characteristics when the data preceding the transition does remain unchanged longer than the first duration and the data following the transition does remain unchanged longer than the second duration;
wherein the write driver (132) is operable to generate the multi-level write current waveform with third characteristics when the data preceding the transition does not remain unchanged longer than the first duration and the data following the transition does not remain unchanged longer than the second duration;
wherein the write driver (132) is operable to generate the multi-level write current waveform with fourth characteristics when the data preceding the transition does remain unchanged longer than the first duration and the data following the transition does not remain unchanged longer than the second duration; and
wherein the second characteristics are more aggressive than the first characteristics, and the third characteristics are more aggressive than the second characteristics, and the fourth characteristics are more aggressive than the third characteristics.

7. The apparatus of any preceding claim, wherein the at least one electrical characteristic of the multi-level write current waveform is selected from a group consisting of an overshoot pulse amplitude, an overshoot pulse width and a steady state current level following an overshoot pulse.

8. The apparatus of any preceding claim, wherein the pattern indication signal comprises a first signal indicating when the data to be written by the magnetic write head (764) has a first pulse duration and a second signal indicating when the data be written has a second pulse duration, the apparatus further comprising a multi-level differential signal generator circuit (500) operable to generate a ternary signal (502) based on the pattern indication signal.

9. The apparatus of claim 8, further comprising a receiver (702) operable to determine a state of the ternary signal (502) and to control the write driver (132) based on the state of the ternary signal (502); and/or wherein the receiver (702) comprises a zero crossing detector (722) and a plurality of slicers (724, 726); and/or wherein the pattern detection circuit (400) and the multi-level differential signal generator circuit (500) are located in a channel circuit (104), and wherein the receiver (702) and the write driver (132) are located in a preamplifier circuit (106).

10. The apparatus of any preceding claim, wherein the write driver (132) comprises an overshoot pulse generator operable to provide an overshoot pulse in the multi-level write current waveform at transitions in the data to be written.

11. The apparatus of any preceding claim, wherein the write driver (132) comprises an output driver bridge (772) and a plurality of reference current sources (790, 792, 794, 796) connected to the output driver bridge (772).

12. The apparatus of claim 11, wherein the output driver bridge (772) comprises a plurality of power current sources (790, 792, 794, 796) operable to switch the multi-level write current waveform through the magnetic write head (764); and/or wherein the plurality of power current sources (790, 792, 794, 796) each comprise a plurality of current mirrors (832, 834, 836, 838, 840 and 842), each of the plurality of current mirrors (832, 834, 836, 838, 840 and 842) contributing a current from one of the reference current sources to the multi-level write current waveform.

13. The apparatus of any preceding claim, wherein the pattern detection circuit (400) and the write driver (132) are located in a preamplifier circuit (1000), the apparatus further comprising a phase-locked loop (1002) in the preamplifier circuit (1000) operable to recover a clock signal (1022) from the data to be written by the magnetic write head (764); and/or wherein the magnetic write head (764), the pattern detection circuit (400) and the write driver (132) are incorporated in a storage device.

14. A method of recording data in a magnetic storage device with a multi-level write current waveform, comprising:
determining a magnetization state of a pole tip in a write head (764) based on a run length of data sequences adjacent to a data transition;
generating at least one signal representing the magnetization state of the pole tip; and
generating the multi-level write current waveform for the write head (764) based on the at least one signal, wherein the multi-level write current waveform is more aggressive for the data transition when the magnetization state is saturated and less aggressive for the data transition when the magnetization state is non-saturated.

15. A storage system (100)comprising:
a storage medium (116) maintaining a data set;
a write head (764) operable to magnetically record the data set to the storage medium (116);
a pattern detection circuit (400) operable to detect a run length in the data set adjacent a transition; and
a write driver (132) operable to generate a multi-level write current waveform for a coil in the write head (764), wherein at least one electrical characteristic of the multi-level write current waveform is based upon the run length detected by the pattern detection circuit (400).
